# EUROPEAN PATENT SPECIFICATION

(11) **EP 3 046 426 B1**
(45) Date of publication and mention of the grant of the patent: **04.11.2020**
(21) Application number: 14844657.8
(22) Date of filing: 16.09.2014
(51) Int. Cl.: A23L 3/26, A61L 2/14

(54) **FOOD SANITIZATION**
LEBENSMITTELSANIERUNG
ASSAINISSEMENT DES ALIMENTS

(30) Priority: 16.09.2013 US 201361878304 P
(43) Date of publication of application: 27.07.2016
(73) Proprietor: Mars, Incorporated, McLean, VA 22101 (US)
(72) Inventor: CORRIGAN, Patrick Joseph, Mason, Ohio 45040-9760 (US)
(74) Representative: Carpmaels & Ransford LLP
(86) International application number: PCT/US2014/055952
(87) International publication number: WO 2015/039137

(56) References cited:
- US-A- 5 741 505
- US-A1- 2011 014 321
- US-A1- 2011 014 330
- US-A1- 2011 159 273
- MISRA, N. N. ET AL.: 'Nonthermal plasma inactivation of food-borne pathogens.' FOOD ENGINEERING REVIEWS vol. 3, no. 3-4, 2011, pages 159 - 170, XP055330393
- SONG ET AL.: 'Evaluation of atmospheric pressure plasma to improve the safety of sliced cheese and ham inoculated by 3-strain cocktail< i> Listeria monocytogenes</i>.' FOOD MICROBIOLOGY vol. 26, no. 4, 2009, pages 432 - 436, XP026053197
- Brendan A. Niemira: "Cold Plasma Decontamination of Foods", Annual review of food science and technology, vol. 3, no. 1, 10 April 2012 (2012-04-10), pages 125-142, XP055491920, US ISSN: 1941-1413, DOI: 10.1146/annurev-food-022811-101132
- Anonymous: "Atmospheric Plasma Technology in the Meat Industry - Food Safety Magazine", , 1 September 2011 (2011-09-01), XP055491921, Retrieved from the Internet: URL:https://www.foodsafetymagazine.com/mag azine-archive1/augustseptember-2011/atmosp heric-plasma-technology-in-the-meat-indust ry/ [retrieved on 2018-07-11]

## Description

### RELATED APPLICATIONS

### FIELD OF THE INVENTION

This disclosure relates to a method for sanitizing food, such as processed foods and/or pet foods.

The invention is defined by the appended claims.

### BACKGROUND OF THE INVENTION

Processed foods often provide a safe, convenient alternative to unprocessed foods. Breakfast cereals, for example, may provide a nutritious, healthy, shelf-stable, and quick meal. As another example, dry pet foods may provide a nutritious, healthy, shelf-stable, easy-to-serve diet for companion animals.

Processed foods may be formulated or treated to reduce the likelihood of microbial growth in the processed food. Microbial growth may be associated with spoilage, including undesirable odors or tastes. In some cases, microbial growth may be associated with food borne illness. In many circumstances, raw or unprocessed food products have a larger microbial population than a processed food made from those raw or unprocessed ingredients. Cooking, manipulation of water content or water activity, and the use of preservatives are some of the techniques used to reduce the bioburden in processed foods.

These techniques can be very effective, but they are not foolproof, and they sometimes have drawbacks. Some effective and inexpensive preservatives may alter the taste of the food, or be associated with food insensitivities, allergies, or other undesirable physiological responses (e.g., headaches or stomach upset associated with a particular preservative compound, whether or not the asserted association is supported by scientific data). Drying a food to reduce water content may have undesirable effects on the texture or taste of the food. Manipulating the water activity of a food may involve adding sugars, salts, or other hydroscopic compounds, which may change the taste, texture, or nutritional profile of the food. Cooking may avoid some of these drawbacks, but only reduces the bioburden at a given time. Cooking may not occur under conditions sufficient to kill all the microorganisms in a processed food at the time of cooking. Further, cooked food may be susceptible to re-inoculation with undesirable microorganisms after the cooking process.

There has been considerable exploration of adjunct processes to help reduce the bioburden in processed foods. Ultraviolet (UV) irradiation has been used, for example, to reduce the bioburden in fruit juices and fresh produce. However, not all foods are suitable for UV treatment. For example, because UV is a light-based technology, it may be difficult to obtain thorough surface UV exposure in foods that are porous and/or particulate. Also, UV irradiation can produce free radicals, which may oxidize compounds in the food. Fats, for example, when oxidized, may contribute to an off-taste or rancid odor, even if the food remains safe to eat. Similarly, cold plasma has been explored as a treatment for fresh produce, including nuts, but was not expected to be useful with porous foods or foods with a significant fat content. Cold plasma treatment generates ions and UV, suggesting that cold plasma should suffer from many, if not all, of the deficits of UV irradiation.

For instance, XP026053197 discloses the evaluation of atmospheric pressure plasma to improve the safety of sliced cheese and ham inoculated by 3-strain cocktail Listeria monocytogenes.

There remains a need for a method to reduce the bioburden in processed foods. There remains a need for a method to reduce the bioburden in processed foods that are porous. There remains a need for a method to reduce the bioburden in processed foods that have a relatively high fat content, or have a high-fat surface or a surface coating that includes fats. There remains a need for a method to reduce the bioburden in processed foods that are surface treated with a substance or composition that is susceptible to degradation by heat and/or UV irradiation.

### SUMMARY OF THE INVENTION

The invention relates to a method for reducing bioburden in a processed food as defined by the appended claims.

The processed food is porous. The processed food may have a porosity greater than about 30%. The processed food may have a porosity greater than about 40%. The processed food may have a porosity greater than about 50%. The processed food may comprise at least 9% fat. The processed food may comprise at least 15% fat. At least 25% of the fat may be coated onto the surface of the processed food. At least 50% of the fat may be coated onto the surface of the processed food.

The processed food comprises a coating. The coating is may deposited on the surface of the processed food. The coating comprises one or more ingredients which are susceptible to degradation by oxidation selected from the group of a fat, oil, enzyme, antibody, immunoglobulin, cytokine, epigenetic agent, vitamin, probiotic microorganism, amino acid, bacteriophage, or combination thereof. The coating may be free of added preservatives. The coating may be free of added sugars or salts.

The processed food is treated with cold plasma after the coating is applied.

There are many methods to generate cold plasma. Air, nitrogen, helium, argon, neon, or combinations of these gases are methods to generate cold plasmas. Electricity, microwaves, radio frequency or lasers can also be used to generate the plasma from the gas. Process include the flow rates of the gases used to generate the plasma, and the distance of the plasma from the object being treated. When using electricity to generate the plasma, the voltage level can be varied. The method of exposing the surfaces of the object(s) to the plasma can be varied, including rotation of the object in the plasma stream, or mixing in the case of multiple object being treated at once, or moving the object under the plasma stream via a device such as a conveyor. The object(s) may also remain static during the plasma treatment. The plasma treatment time can vary from 1 second to over 30 minutes, where values such as 15 seconds, 30 seconds, 1 minute, 2 minutes, 3 minutes, 4 minutes, 5 minutes, 10 minutes, 15 minutes, 20 minutes, and 25 minutes are envisioned.

The processed food may be a dry pet food.

### BRIEF DESCRIPTION OF THE DRAWINGS

FIG. 1 is an image of an exemplary processed food.
FIG. 2 is an image of an exemplary processed food.
FIG. 3 is a side view of an exemplary, spiral, vibrating conveyor.
FIG. 4 is a top view of an exemplary, spiral, vibrating conveyor.

### DETAILED DESCRIPTION OF THE INVENTION

Cold plasma is an ionized gas generated by the electrical excitation of a gas. The cold plasma consists of electrons, positive and negative ions, free radicals, and gas atoms, and can be generated at roughly 30 to 40°C at 1atm. Cold plasma can be used to consistently inactivate surface microbes, including surface microbes present on food products. However, because of the composition of the plasma, cold plasma has been considered unsuitable for foods with a relatively high fat content, or with coatings or surface treatments including fat, because the fats would be susceptible to oxidation by the free radicals and other species in the plasma.

This was a daunting problem because the mechanism of action for microbial inactivation is believed to be an interaction between reactive species (such as UV and/or free radicals) in the cold plasma and the microbial cell wall. That is, because cold plasma exists at 30-40°C, the microbial inactivation is not attributed to heat, but to the biologically reactive chemical species produced as part of the cold plasma. Mechanisms to overcome this, such as adding antioxidants to the fat, have their own drawbacks, including cost, modification of the nutritional profile of the food, and possible effects on taste and texture.

Cold plasma has also been used on particulate food, or food that occurs in discrete pieces (as opposed to liquids), such as almonds. However, the foods successfully treated with cold plasma, although sometimes described as porous, have presented relatively smooth surfaces for treatment. It was expected that porous processed foods, such as dry pet food kibble, would be challenging, if not impossible, to treat successfully with cold plasma because of the extreme porosity of the kibble relative to produce and nuts. In many instances of contamination of food, the microorganism may be distributed over a majority of the surface of the food. Thus, it is preferred that the method of the present invention includes subjecting all parts of the food product to cold plasma. This method is distinct from the prior art in that most previous descriptions of cold plasma treatment of food treat only a portion of the surface, leaving the potential for agents of food borne illness to proliferate and cause illness. As described above, the free radicals and UV in the cold plasma could oxidize fats or other sensitive ingredients in the processed food, causing changes in smell, taste, and/or nutritive value. While cold plasma might seem advantageous for porous foods for its ability to penetrate pores, that same penetration could exacerbate the oxidation problem, since nutrients throughout the porous base composition would be exposed to the UV and free radicals, as opposed to only the outer surface of the food.

As described in the examples below, it has now been demonstrated that, contrary to expectation, high-fat, porous foods can be successfully treated with cold plasma, with no apparent increase in the oxidation of the fat.

As used herein, "kibble" or "dry kibble" refers to an extruded food product with a moisture level less than or equal to 15%, by weight of the food product. "Semi-moist" refers to a food product with a moisture level between 15% and 50%, by weight of the food product. "Wet" refers to a food product having a moisture content equal to or greater than 50%, by weight of the food. Semi-moist or wet foods may be prepared at least in part using extrusion cooking, or may be prepared entirely by other methods. "Non-extruded" refers to a food product prepared by any method other than extrusion cooking, such as frying, baking, broiling, grilling, pressure cooking, boiling, ohmic heating, steaming, and the like.

As used herein, "pet" or "companion animal" means dogs, cats, and/or other domesticated animals of like nutritional needs to a dog or a cat. For example, other domesticated animals of like nutritional needs to a cat may include minks and ferrets, who can survive indefinitely and healthily on a nutritional composition designed to meet the nutritional needs of cats. It will be appreciated by one of skill in the art that dogs and cats have nutritional needs which differ in key aspects. At a fundamental level, dogs are omnivores, whereas cats are obligate carnivores. Further, nutritional needs are not necessarily consistent with phylogenetic or other non-nutritional classifications.

As used herein, "nutritionally balanced" refers to a composition formulated and intended to be the sole ration for an animal other than a human. A nutritionally balanced composition is capable of maintaining life without any additional substances being consumed, except possibly water. Generally accepted nutritional needs are described, for example, in Nutrient Profiles for dogs and cats published by the Association of American Feed Control Officials (AAFCO).

As used herein, "processed food" refers to a food that has been irreversibly altered from its natural state, as by cooking, maceration, chemical combination with other foods or ingredients, and the like. As used herein "processed food" does not describe produce or other naturally-occurring foods, even if the naturally-occurring food has been processed in the sense that it has been harvested, cleaned, packaged, etc.

As used herein, "multi-component" refers to a food which comprises no more than 75% by weight of a single ingredient.

As used herein, "particulate" refers to a food that is routinely prepared for consumption as a plurality of discrete particles, generally more than 30 or even more than 40 or 50 discrete particles to a serving. Exemplary particulate foods include pet food kibble and human breakfast cereal. It should be appreciated that most foods are susceptible to division into many particles, but not all foods are particulate foods.

As used herein, bioburden is defined as the number of bacteria living on a surface before it is sterilized. Therefore, the method of the present invention preferably reduces the number of bacteria living on the surface of the product.

A method for reducing bioburden in a processed food may comprise providing a processed food. The processed food may be a shelf-stable food, stable at room temperature for at least 12 months. The processed food may, for example, be a cookie, cracker, biscuit, bar, kibble, or puff. The processed food may comprise a gelatinized starch matrix. The processed food may be particulate. The processed food may be extruded, and, if extruded, may be extrusion cooked. The processed food may be a multi-component food. The processed food may be dry, moist, or semi-moist.

The processed food may be nutritionally balanced. The processed food may be a diet for a companion animal. The processed food may be a diet for a cat (including kittens and/or seniors), dog (including puppies and/or seniors), or ferret (including kits and/or seniors). The processed food includes a coating containing a fat, oil, or other ingredient that is susceptible to degradation by oxidation as defined in the claims. The ingredient may be susceptible to degradation by heat. The ingredient susceptible to degradation by oxidation is a fat, oil, enzyme, antibody, immunoglobulin, cytokine, epigenetic agent, vitamin, probiotic microorganism, amino acid, bacteriophage, or combination thereof.

Suitable fats and oils may include, without limitation, chicken fat, pork fat, beef fat, soybean oil, corn oil, milk fat, palm oil, and the like, including fats and oils which are hydrogenated, partially hydrogenated, saturated, unsaturated, or otherwise modified, and combinations thereof. More saturated fats may be less sensitive to oxidation. In some embodiments, the fat or oil is at least partially unsaturated. For example, the fat or oil may have an iodine value greater than 40. Preferably, the fat or oil is at a neutral pH.

Nonlimiting examples of enzymes include proteases, collagenases, lipases, amylases, cellulases, lysozymes, candidases, lactases, kinases, invertases, galactosidases, pectinases, ribonucleases (including deoxyribonucleases) and combinations thereof. Non-limiting examples of antibodies include antibodies to feline rhinotracheitis, feline panleukopenia, feline calicivirus, feline pneumonitis, feline leukemia, canine distemper, canine parvovirus, coronavirus, *Borrelia burgdorferi* (Lyme Disease), *Toxoplasma gondii, E. coli,* campylobacter, *salmonella, clostridia,* bacteriodes, giardia, tapeworm, roundworm, coccidian, cryptosporidium, and combinations thereof.

Non-limiting examples of immunoglobulins include immunoglobulin A (IgA), immunoglobulin M (IgM), immunoglobulin G (IgG), and combinations thereof. Non-limiting examples of cytokines include transforming growth factor beta (TGF-beta), tumor necrosis factor alpha (TNF-alpha), interleukin-4, interleukin-10, interleukin-12, and combinations thereof. Non-limiting examples of epigenetic agents include isoflavones, anthocyanins, carotenoids (including, without limitation, astaxanthin and beta-carotene), flavanoids, polyphenols, L-carnitine, coenzyme Q10, glutathione, lutein, lycopene, selenium, N-acetylcysteine, S-adenosylmethionine, taurine, tocotrienol(s), lipoic acid, and combinations thereof. Non-limiting examples of vitamins include Vitamins A, C, D, E, K, and B₁₂. Non-limiting examples of amino acids include glycine, 1-alanine, tryptophan, Arginine, histidine, isoleucine, leucine, lysine, methionine, cysteine, phenylalanine, tyrosine, threonine, valine, and combinations thereof. Most preferably, the immunoglobulins are vitamin E, methionine, and combinations thereof.

Non-limiting examples of probiotic microorganisms include, without limitation, bacteria or yeast of the genera Bacillus, *Bacteroides, Bifidobacterium, Enterococcus* (e.g., *Enterococcus faecium* DSM 10663 and *Enterococcus faecium* SF68), *Lactobacillus, Leuconostoc, Saccharomyces, Pediococcus Candida, Streptococcus, Torulopsis,* and combinations thereof. If used, a probiotic microorganism may be selected for probiotic efficacy using deactivated microbes, or a live probiotic microorganism may be encapsulated or coated to protect the live probiotic microorganism from a cold plasma treatment. If the microorganism provides probiotic effects after deactivation, the microorganism may be deactivated prior to incorporation into or coating onto the food, or may be deactivated by treating the food product with cold plasma. Non-limiting, exemplary species of probiotic microorganisms include *Streptococcus lactis, Streptococcus cremoris, Streptococcus diacetylactis, Streptococcus thermophilus, Lactobacillus bulgaricus, Lactobacillus acidophilus (e.g., Lactobacillus acidophilus* strain DSM 13241), *Lactobacillus helveticus, Lactobacillus bifidus, Lactobacillus casei, Lactobacillus lactis, Lactobacillus plantarum, Lactobacillus rhamnosus, Lactobacillus delbrukii, Lactobacillus thermophilus, Lactobacillus fermentii, Lactobacillus salvarius, Lactobacillus reuteri, Bifidobacterium longum, Bifidobacterium infantis, Bifidobacterium bifidum, Bifidobacterium animalis, Bifidobacterium pseudolongum, Pediococcus cerevisiae,* and combinations thereof. In a most preferred embodiment, the probiotic organisms are *Bifidobacteria* in general, and *B. infantis* and *B. animalis* in particular. In an embodiment, where the method includes the use of a probiotic organism, it is preferably applied after cold plasma treatment.

Because of the differences between the structure of bacterial cell walls and viral coats, cold plasma treatment is not expected to inactivate viruses, such as bacteriophages. Suitable bacteriophages for use in a food product may include, without limitation, bacteriophages of the Siphoviridae, Podoviridae, or Myoviridae families, or combinations thereof. The bacteriophages may be wild-type or genetically modified or combinations thereof. The bacteriophages may be infective and lytic or otherwise fatal with respect to at least one species or strain of bacteria of the genus *Streptococcus, Enterobacterium, Escherichia, Salmonella, Listeria, Shigella, Campylobacter* or combinations thereof. In a preferred embodiment, the bacteriophage is applied to the food product after cold plasma treatment.

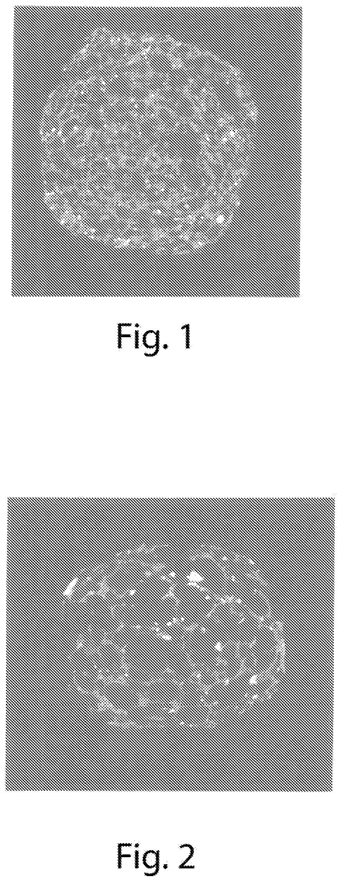

The processed food is porous. The percent porosity of the processed food, at the surface and as measured using the method described below, may be greater than about 20%, or about 30%, or about 40%, or about 50%, or about 60%, or about 70%, or about 80%, or about 85%, or greater. FIG. 1 shows an exemplary processed food, a dry dog kibble, having a porosity of 54%. FIG. 2 shows an alternative, exemplary processed food, a dry dog kibble, having a porosity of 79%.

In addition to being porous, the processed food may be dry, semi-moist, or wet. Each of these types of food present their own challenges to cold plasma treatment and these challenges are exacerbated by the porosity. Further, each type of food can be associated with each percentage of porosity. For example, a dry food with less than 15% moisture can have porosity that varies from 20% to 85% or greater, as well as each of the points therebetween.

The processed food is treated with cold plasma. The cold plasma may be generated using microwave and/or radio frequency plasma exciters, AC current or DC current, or adiabatic compression, or any equivalent method for generating cold plasma. If voltage is used to generate the cold plasma, one electrode may be covered with a dielectric to limit the discharge current. The processed food may be treated using any suitable apparatus, including curtain, jet, or tumbling apparatus, mixer, or device that rotates or flips the product, as are known in the art. These methods of moving the product around within the plasma stream are often necessary in order to ensure the effective contact of the plasma with the majority of the surface of the object(s).

The cold plasma is generated from atmospheric gas (i.e., a mixture of predominantly nitrogen, oxygen, argon and carbon dioxide). The treatment is carried out at atmospheric pressure (e.g., 1 atm), plus or minus about 10%. The treatment does not require reduced atmospheric pressure (e.g., vacuum), and does not require special containment of the plasma (e.g., in-package or otherwise constrained treatment field), although either or both of those conditions could be applied, if desired. The treatment may occur at a local temperature (within the plasma jet or field) of approximately 20-50°C, more preferably 30-40°C. The treatment time may vary from 0.1 second to 600 seconds, preferably 10 to 180 seconds, and more preferably 20 to 120 seconds, depending on the equipment and product configuration and the bioburden level at the start of treatment. There are no current methods of measuring the strength extent or composition of the cold plasma itself. Therefore the description must consist of the parameters used to generate and control the plasma. Various filters may be used to limit or eliminate certain aspects of the plasma, such as UV. The treatment is conducted under conditions sufficient to effect at least a 1 log reduction in the bioburden in the processed food, more preferably a 2 log reduction, more preferably a 3 log reduction, even more preferably a 4 log reduction and most preferably at least a 5 log reduction in the bioburden of the processed food.

The bioburden reduction may be measured with relation to a specific genus. For example, bioburden reduction may be measured as a reduction in *Salmonella, Escherichia, Listeria, Camplyobacter,* Cronobacter, *Staphylococcus, Vibrio, Clostridium, Bacillus, Shigella, Yersinia, Alternaria, Aspergillus, Botrytis, Cladosporium, Fusarium, Geotrichum, Monilia, Monascus, Mortierella, Mucor, Neurospora, Oidium, Oosproa, Penicillium, Rhizopus, Saccharomyces, Thamnidium,* or combinations thereof. The LOG system is the preferred and commonly used method of describing bioburden reduction.

The processed food may comprise at least 5%, or at least 9%, or at least 15% fat, by weight of the processed food. At least 20%, or at least 25%, or at least 30%, or at least 40%, or at least 50% of the fat content of the processed food may be coated onto the surface of the coated food (as opposed to incorporated into a dough or mixture used to make a more-or-less homogenous base to which a coating might be applied). It should be understood that a coating need not be consistent or homogenous across the entire surface of the processed food. For example, a snack bar having a generally cuboid shape may be coated only on one of its six faces. As another example, a coating need not have a uniform thickness or pattern of application across the surface of the processed food, or the portion of the surface of the processed food that has been coated.

The coating of the processed food comprises an ingredient susceptible to degradation by oxidation selected from the group consisting of fats, oils, enzymes, antibodies, immunoglobulins, cytokines, epigenetic agents, vitamins, probiotic microorganisms, amino acids, bacteriophages, and combinations thereof. The coating may be free of added preservatives. That is, aside from nutritional ingredients which may provide a "preservative" or anti-oxidant effect (such as Vitamin E, carotenoids, proanthocyanins, etc.), the coating may comprise less than 1%, more preferably less than 0.5%, even more preferably less than 0.25% by weight of the coating, of any additive intended to prevent degradation from oxidation, degradation from heat exposure, or both. In some embodiments, an ingredient which would otherwise be sensitive to degradation by oxidation and/or heat is not encapsulated. In some embodiments, the coating is free of added sugars, salts, or combinations thereof. That is, the coating may contain naturally occurring sugars or salts that arise from the ingredients of the coating (e.g., fructose from fruits or fruit derivatives), but does not have any supplemental sugars or salts added separately.

The processed food is coated and treated with cold plasma after the coating is applied.

In some embodiments, the processed food may be exposed to cold plasma during mixing, rotating, flipping, or conveying. The mixing, rotating, flipping or conveying step may be part of another process separate from the cold plasma treatment, such as coating, mixing, blending, or packaging. Suitable mixers include ribbon mixers, paddle mixers, drum mixers, plough mixers, cone mixers, and the like. A particularly suitable mixer may be a fluidized paddle mixer, such as the fluidized paddle mixers described in US Patent Application Publication Number 2012/0021094.

In some embodiments, the processed food may be exposed to cold plasma while it is being conveyed. In some embodiments, the processed food may be exposed to cold plasma while it is being conveyed along a vibratory conveyor.

A vibrating conveyor may be linear or planar, but more often is presented as a spiral elevator or vibrating helix. A vibrating conveyor is conventionally used to move particles upward, as from a truck to a silo. Particles are moved along the conveyor by vibration. The conveyor is typically configured to maximize horizontal movement, and the conveyor itself is configured to move particles in the vertical direction. For example, the conveyor may be spiral, such that "horizontal" movement along the conveyor also moves the particles vertically over the length of the conveyor. In such a configuration, the conveyor and the vibration of the conveyor are configured to minimize vertical movement of the particles relative to the conveyor surface, because such vertical movement is not productive with regard to advancing particles along the conveyor. Thus, regardless of the depth of the conveyor bed, there is little turnover of particles in the vertical or z-direction as they move along the vibrating conveyor. Particles which start at the bottom of the bed tend to reside at or near the bottom of the bed at the end of the conveyor, and particles which start at the top of the bed tend to reside at or near the top of the bed at the end of the conveyor.

In contrast, by changing the vertical amplitude of the vibration, dimensionless acceleration, plug flow (as measured by Peclet number, described below), and/or other parameters, it is possible to tune the vibration of a vibrating conveyor to get regular z-direction or vertical exchange of particles moving horizontally along the vibrating conveyor. Combined with one or more surface treatment locations along the path of the vibrating conveyor, this z-direction movement can be used to coat particles in a continuous process. By tuning the vibration, more or less uniform surface treatments may be applied all around the particles. That is, because the particles are moving in the z-direction, most or all of the surface of the particles can be exposed to the surface treatment without batch mixing, as in a paddle mixer. Further, because the particles change position relative to one another in the z-direction, it is possible to surface treat multiple surfaces of multiple layers of particles, unlike in conventional spray coating, which coats one side or one surface of a single layer of particles. Surface treatment may include, without limitation, cold plasma treatment and/or coating.

Thus, by reconfiguring the vibrating conveyor to achieve the desired level of z-direction movement and particle exchange, it may be possible to achieve more regular, even surface treatment of a larger number of particles than is possible using a conventional coating apparatus of comparable size and mass flow. This may help provide consistent, even dosing of active coating ingredients, and/or uniform exposure to cold plasma treatment. If multiple surface treatment locations are used along the path of the vibrating conveyor, it is possible to get multiple layers of predictable, uniform coatings and/or surface treatments over most or all of the surface area of a particle or piece of food. By adjusting the settings on the vibrating conveyor, this surface treatment/mixing process can be used even with relatively fragile products, such as fresh fruit or brittle processed foods. Further, by varying the type, number, and placement of surface treatment locations along the vibrating conveyor, it is possible to provide thick coatings (as by applying more of the same coating at different points along the conveyor) and/or complex coatings (for example, layers of different coatings in different volumes, weights, or thicknesses), as well as to sanitize various layers even if later coating layers are not permeable to cold plasma or other surface treatments.

For a vibrating conveyor, process parameters can be varied to provide desired surface treatment and mixing properties. These process parameters, as described below, may include, but are not limited to, level of fill of the vibrating bed, flow rate through the vibrating bed, vibration amplitude, vibration frequency, location of the addition points of the surface treatment, order or sequence of the surface treatment, pattern of spray of the nozzle for the liquid coating, droplet size of the liquid coating, and particle size of the solid.

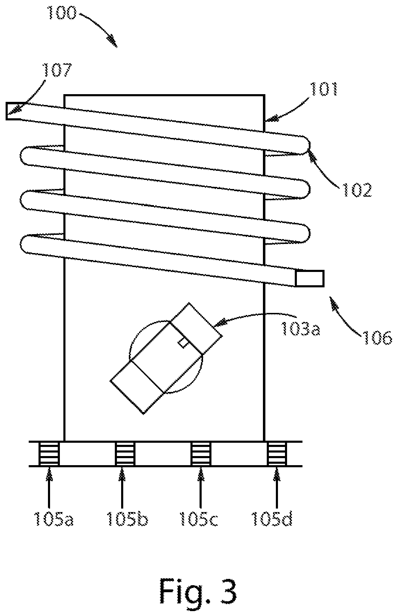

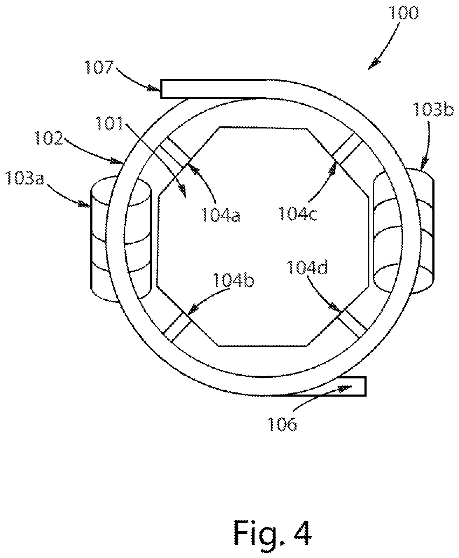

A side view of one embodiment of a non-limiting example of a spiral, vibrating conveyor is shown in FIG 3, and a top view of one exemplary embodiment of a spiral, vibrating conveyor is shown in FIG 4. A pipe 102 is wound in a helix, or coil, around a central column 101 and mounted to the column by a set of supports 104a, 104b, 104c, and 104d. The central column 101 rests on a set of shock absorbers 105a, 105b, 105c, and 105d. Two electric motors 103a and 103b with rotating weights (not shown) are mounted on either side of the column 101. The motors 103a and 103b are mounted at an angle with respect to horizontal. A typical angle may be 45 degrees. The motors 103a and 103b are offset from each other by 90 degrees. The motors 103a and 103b impart a vertical vibration component and a horizontal vibration component to the column 101. The column 101, in turn, imparts these vibration components to the helical pipe. The magnitude of both the vertical and horizontal vibrations is determined by the frequency of the motor, the size, shape, and position of the weights, the power of the motor, and the angle of the motor relative to horizontal. Food particles are fed into the helical pipe at the product entrance (106). The vertical vibration of the pipe 102 causes the food to bounce up and down within the pipe 102, essentially fluidizing the food (with respect to the movement of the food, not necessarily with respect to the constitution of the food or food particles). The horizontal vibration of the pipe 102 causes the food to proceed up and through the pipe. The food then exits the pipe at the product exit 107.

As shown in FIG 3, pipe 102 provides the channel for the flow of materials, such as food. While a pipe is shown, any shape and dimension of vibrating conveyor can be used. Thus, in one embodiment, the vibrating conveyor comprises a channel having an inlet and an outlet. The channel, as described, can be of several types of cross sections. In certain embodiments, the channel can have a substantially round cross-section. In certain embodiments, the channel can have a substantially rectangular cross-section. In certain embodiments, the channel can have a substantially rectangular cross-section with a dished bottom.

In one embodiment, the channel can have a particular diameter. In one embodiment, the diameter of the channel can be at least four times as large as the ESD of the food particles. ESD (equivalent spherical diameter) of an irregularly-shaped object is defined as the diameter of a sphere of equivalent volume. In one embodiment in which a pipe is used for the channel, and in which a pipe can be considered a substantially round cross-section, the pipe can have a diameter of about 8 inches, or about 1 to about 20 inches, or about 5 to about 15 inches. However, any diameter of pipe can be used.

In one embodiment, the vibrating conveyor can have particular number of coils, as shown in FIG 3. In one embodiment, the vibrating conveyor can have a single coil. In one embodiment, the vibrating conveyor can have more than one coil. In one embodiment, the vibrating conveyor can have two coils, or three coils or four coils or eight coils, or up to about 30 coils. Partial coils are also envisioned.

The vibrating conveyor can be made of stainless steel. In one embodiment, the vibrating conveyor can be made of 316 stainless, or 304 stainless, or 316L stainless. Other materials may be used.

The vibrating conveyor can be used to apply surface treatments to the food. The food may be introduced at one end of the conveyor. The vibration of the bed of the conveyor causes the food to fluidize, and, at the same time, the food moves forward through the conveyor. The continuous flow of food into the conveyor and the continuous flow of food out of the conveyor may be adjusted so that the flows are mass balanced and steady state, and the amount of food at any one time inside the mixer is approximately constant. A suitable vibrating conveyor may be obtained, for example, from Carrier Vibrating Equipment of Louisville, Kentucky, USA, and Carman Industries of Jeffersonville, Indiana, USA.

The vibrating conveyor can be operated to adjust particular properties of the particles being transported through the vibrating conveyor. In one embodiment, the dimensionless acceleration number of the particles can be affected. In operation, the dimensionless acceleration number is the ratio of the upward acceleration of the particles due to the vibration of the bed of the conveyor divided by the downward acceleration due to gravity. The dimensionless acceleration number can be expressed as the product of the vibration frequency squared times the vertical amplitude of the vibration divided by the gravitational constant. Thus, the equation for the dimensionless acceleration number can be represented as follows: ω²a/g, where "ω" is the vibration frequency, "a" is the vertical amplitude of vibration, and "g" is the gravitational constant.

In one embodiment, the conveyor can be operated so that the dimensionless acceleration number can be greater than about 0.3. In one embodiment, the conveyor can be operated so that the dimensionless acceleration number can be greater than about 1. In one embodiment, the conveyor can be operated so that the dimensionless acceleration number can be between about 0.5 and about 2, or from about 0.5 to about 1.5, or from about 0.5 to about 5, or from about 1 to about 4.

In one embodiment, the conveyor can be operated so that the average vertical amplitude of vibration can be greater than about 3 mm. In one embodiment, the conveyor is operated so that the average vertical amplitude of vibration can be between about 3 mm and about 20 mm, or between about 5 mm and about 20 mm, or about 7 mm to about 15 mm. Greater vertical amplitude of vibration causes the particles in the bottom layer of flow to circulate upward into the flow of the coating material being applied to the particles. This circulation helps provide more even coating of the particles.

As used herein, bed depth is defined as the distance between the top of the bed of particles in the conveyor to the bottom of the bed. In the case of a vibrating conveyor using a trough type conveying device, the bottom of the bed would be measured at the deepest point in the trough. In one embodiment, the bed depth can be from about 0.5 cm to about 15 cm, or from about 3.5 cm to about 12 cm, or from about 5 cm to about 10 cm.

In one embodiment, as depth of the bed of particles flowing through the conveyor increases, the amplitude can increase as well to help provide more even coating of the particles. Thus, in one embodiment, the ratio of the vertical amplitude of vibration to the bed depth can be between about 0.01 to about 1. In one embodiment, the ratio of the average vertical amplitude of vibration to the bed depth can be between about 0.1 to about 0.5, or from about 0.1 to about 0.3, or about 0.2. Without being limited by theory, it is thought that maintaining this ratio can lead to better mixing and coating of the particles.

In one embodiment, the frequency of vibration may be from about 1 to about 100 Hz. In one embodiment, the frequency of vibration may be from about 1 to about 50 Hz, or from about 1 to about 20 Hz, or from about 1 to about 10 Hz or about 5 Hz, or about 5 to about 15 Hz or about 10 Hz.

In one embodiment, the vibrating conveyor can be operated such that the ratio of the amplitude of vertical vibration to the ESD of the food can be from about 0.5:1 to about 3:1, or from about 1:1 to about 2:1, or from about 1.5:1 to 2:1, such that the operation of the vibrating conveyor moves the food from the inlet to the outlet of the vibrating conveyor.

It may be desirable that the flow of the core material through the vibrating conveyor be substantially plug flow. Plug flow is defined as the minimization of axial mixing. Axial mixing is defined as the tendency of an aliquot of core materials to spread away from one another in the direction of the mass flow of the core material. When flow of the core material is substantially plug flow, different particles are each in the vibrating conveyor for approximately the same amount of time. With increasing axial mixing, the times that the particles spend in the vibrating conveyor can vary somewhat, possibly resulting in more uneven coating from one particle to another. The amount of axial mixing in a vibrating conveyor can be calculated according to the method described in Levenspiel's "Chemical Reaction Engineering", 3rd edition. The Peclet number is a measurement of the amount of axial mixing and degree of plug flow. The Peclet number is a dimensionless number that is the ratio of the bulk flow of the particles to the axial mixing along the length of the vibrating conveyor in the direction of particle flow. The larger the Peclet number, the better the plug flow. Higher Peclet numbers may result in more even coating of the particles. In one embodiment, the vibrating conveyor can be operated so that the Peclet number is greater than about 6. In one embodiment, the vibrating conveyor is operated so that the Peclet number is greater than about 100. In one embodiment, the vibrating conveyor is operated so that the Peclet number is greater than about 1000. In one embodiment, the vibrating conveyor is operated so that the Peclet number is greater than about 10000.

The processed food is coated and exposed to cold plasma treatment. coating. Some food ingredients, such as meat digests, meat meals, fresh produce, or combinations thereof, may be more likely to contain undesirable bioburden than some other food ingredients. In some embodiments, cold plasma treatment may be applied after one or more coating layers comprising meat digests, meat meals, fresh produce, or combinations thereof. In some embodiments, the processed food is coated and exposed to cold plasma treatment in a vibratory conveyor. In some embodiments, the vibratory conveyor is enclosed. In some embodiments, the food is exposed to multiple cold plasma treatment locations within the vibratory conveyor.

In some embodiments, cold plasma treatment may be used to sanitize food processing equipment. The food processing equipment may be sanitized before, during, or after the use of the food processing equipment to process food. Exemplary food processing equipment may include, without limitation, conveyors, storage or transportation bins (including, without limitation, trays, boxes, tubs, bags, and the like), mixers, blenders, coaters, and packaging equipment.

### Example 1

### Materials and Methods

About 6000 g of lams® ProActive Health® Adult MiniChunk, a commercially available dog food kibble having a porosity of approximately 40%, was added to a 20 liter Forberg ® fluidizing paddle mixer. The mixer was started at a speed of about 95 RPM, and about 300 g of 120 F poultry fat was sprayed over the mixing kibbles via an air-assisted spray nozzle (Spray Systems Inc.). The poultry fat was sprayed over the kibbles over about 60 seconds, then about 600 g of chicken meal was sprinkled over the kibbles over about 60 seconds. The chicken meal was analyzed to have a salmonella level of greater than 0.04 MPN (Most Probable Number)/gm by the DuPont BAX method. The mixer was then stopped and the coated kibbles were removed. Three 500-gram samples were collected from the coated kibbles. Each of the three samples was analyzed to have a salmonella level of greater than 0.04 MPN (Most Probable Number)/gm. Samples 1 and 2 were treated was cold plasma treated with an Enercon Dyne-A-Mite HP Plasma Treater over the course of about 2 minutes. The ionized gas produced by the plasma treater was air. The voltage between the two electrodes that generate the ions from the air was about 6500 V. Sample 3 was an untreated control.

### Results and Conclusions

After treatment of the Samples 1 and 2, all three samples were analyzed for the marker microbe. Samples 1 and 2, which were treated with cold plasma, were analyzed by the Dupont BAX method to be less than 0.04 MPN/gm (or tested negative for the target marker microbe at a detection limit of 0.04 MPN/gm). Sample 3, which had no cold plasma treatment was analyzed by the Dupont BAX® method to be greater than 0.04 MPN/gm or tested positive for the target marker microbe at a detection limit of 0.04 MPN/gm).

### Example 2

### Materials and Methods

Approximately 1 kg of salmonella-inoculated pet food kibbles were prepared by spraying the kibble with a culture containing *Salmonella enteric* serovars Westhampton, Livingstone, and Worthington. The kibbles were turned over and sprayed with additional culture. The kibbles were placed in a large plastic bag and the bag was shaken vigorously for about 1 minute to mix the kibbles. The targeted amount of total *Salmonella* on the kibbles was about 1000 cfu/g (colony-forming-units/gram). The kibbles were spread out in a tray and left to dry for 24 hours, then placed in a sealed bag prior to use. These salmonella-inoculated kibbles are used in the following examples.

### Example 3

### Materials and Methods

Kibbles from Example 1 were used in this experiment. The plasma head of an Enercon Dyne-A-Mite HP cold plasma generator was mounted above a 16-oz paper bowl, which in turn sat on top of an elliptical shaker. The shaker ensured that the kibbles were well agitated during treatment so that all surfaces were exposed as much as possible to the plasma. Since the plasma is a gas, the gas could flow around the kibbles to a certain extent, and penetrate into the pores and crevices on the surface. Ten 50-g samples were withdrawn from the bag of inoculated kibbles. Five of the 50-g samples were control samples and were placed in individual plastic bags. The other five 50-gram samples were placed in individual paper bowls. Each paper bowl containing kibbles was treated with cold plasma as follows. The paper bowl with 50-g of kibbles was placed on the elliptical shaker, and the speed of the shaker was adjusted to about 250 RPM. The cold plasma head was mounted so that the tip of the plasma jet ended about 2-3 mm above the kibbles. Each sample was treated with plasma for about 2 minutes. Each 50-gram plasma treated sample was placed in an individual plastic bag. All ten 50-g samples were analyzed for salmonella according to the method described in the US Food and Drug Adminstration Bacteriological Analytical Manual, Appendix 2, Most Probable Number from Serial Dilutions (http://www.fda.gov/Food/FoodScienceResearch/LaboratoryMethods/ucm109656.htm).

### Results and Conclusions

The table below shows the results of the analysis. This experiment demonstrated that cold plasma is an effective method to reduce salmonella on pet food kibbles. As shown below in Table 1, the plasma treated groups had 0 cfu/g compared to the control groups. Within the control groups, sample 1 had 933 cfu/g, sample 2 had 427 cfu/g, sample 3 had 933 cfu/g sample 4 had 385 cfu/g and sample 5 had 933 cfu/g. Sample 5 of the plasma-treated group had 35.71 cfu/g salmonella.

**TABLE 1:**

| **Sample** | **Control (cfu/g)** | **Plasma-treated (cfu/g)** |
|---|---|---|
| 1 | 933 | 0 |
| 2 | 427 | 0 |
| 3 | 933 | 0 |
| 4 | 385 | 0 |
| 5 | 933 | 35.71 |
| | **Control average** | **Treated average** |
| | 722 | 7 |
| | **Control Std Dev** | **Treated Std Dev** |
| | 289 | 16 |

### Example 4

This example shows the effect of treatment time on the effectiveness of the cold plasma treatment where the tip of the plasma jet is placed very close to the top of the bed of kibbles.

### Materials and Methods

About 1 kg of salmonella-inoculated pet food kibbles was prepared as in Example 3. The plasma head of an Enercon Dyne-A-Mite HP cold plasma generator was mounted above a 16-oz bowl which in turn sat on top of an elliptical shaker. Four 50-g samples were withdrawn from the bag of inoculated kibbles. One of the 50-g samples was a control sample and was placed in a plastic bag. The other two 50-gram samples were placed in individual bowls. Each bowl containing kibbles was treated with cold plasma as follows. The bowl with 50-g of kibbles was placed on the elliptical shaker, and the speed of the shaker was adjusted to about 250 RPM. The cold plasma head was mounted so that the tip of the plasma jet ended about 2-3 mm above the kibbles. The samples were treated with plasma for either 30, 60, or 120 seconds. Each 50-gram plasma-treated sample was placed in an individual plastic bag. All four 50-g samples were analyzed for salmonella according to the method described in the US Food and Drug Administration Bacteriological Analytical Manual, Appendix 2, Most Probable Number from Serial Dilutions:
(http://www.fda.gov/Food/FoodScienceResearch/LaboratoryMethods/ucm109656.htm) . Results and Conclusions

Table 2 below shows the results of the analysis. This experiment demonstrates that cold plasma is an effective method to reduce salmonella on pet food kibbles. In the first group, there was no cold plasma treatment and this group had 460 cfu/g salmonella. Group 2 was treated with cold plasma treatment for 30 seconds and had 23 cfu/g salmonella. The third group was treated with cold plasma treatment for 60 seconds and had 9.2 cfu/g salmonella. Finally, the fourth group was treated with cold plasma for 120 seconds and had less than 3 cfu/g of salmonella.

**TABLE 2**

| **Treatment time (sec)** | **Salmonella (cfu/g)** |
|---|---|
| 0 | 460 |
| 30 | 23 |
| 60 | 9.2 |
| 120 | <3 |

### Example 5

This example shows the effect of treatment time on the effectiveness of the cold plasma treatment where the tip of the plasma jet is placed father away from the top of the bed of kibbles than in Example 5. About 1 kg of salmonella-inoculated pet food kibbles was prepared as in Example 3. The plasma head of an Enercon Dyne-A-Mite HP cold plasma generator was mounted above a 16-oz bowl which in turn sat on top of an elliptical shaker. Three 25-g samples were withdrawn from the bag of inoculated kibbles. One of the 25-g samples was a control sample and was placed in a plastic bag. The other three 25-gram samples were placed in individual bowls. Each bowl of kibbles was treated with cold plasma as follows. In the first experiment, the bowl with 25-g of kibbles was placed on the elliptical shaker, and the speed of the shaker was adjusted to about 250 RPM. The cold plasma head was mounted so that the tip of the plasma jet ended about 25 mm above the kibbles. The sample was treated with plasma for about 30 seconds. In the second experiment, the procedure was the same as the first experiment except that the treatment time was 60 seconds. Each 25-gram plasma-treated sample was placed in an individual plastic bag. All three 25-g samples were analyzed for salmonella according to the method described in the US Food and Drug Administration Bacteriological Analytical Manual, Appendix 2, Most Probable Number from Serial Dilutions (http://www.fda.gov/Food/FoodScienceResearch/LaboratoryMethods/ucm109656.htm). The table below shows the results of the analysis. This experiment demonstrates that placing the tip of the plasma jet about 25 mm about the surface of the kibble bed is an effective method of reducing salmonella on pet food kibbles. As shown in Table 3 below, the first group received no cold plasma treatment and had 460 cfu/g salmonella. Group 2 was treated with cold plasma for 30 seconds and had 23 cfu/g salmonella. Group 3 was treated with cold plasma for 60 seconds and had less than 3 cfu/g salmonella.

**TABLE 3:**

| **Treatment time (seconds)** | **Salmonella (cfu/g)** |
|---|---|
| 0 | 460 |
| 30 | 23 |
| 60 | <3 |

### Example 6

This example shows the effect of mixing on the effectiveness of the cold plasma treatment.

### Materials and Methods

About 1 kg of salmonella-inoculated pet food kibbles was prepared as in Example 3. The plasma head of an Enercon Dyne-A-Mite HP cold plasma generator was mounted above a 16-oz bowl which in turn sat on top of an elliptical shaker. Three 25-g samples were withdrawn from the bag of inoculated kibbles. One of the 25-g samples was a control sample and was placed in a plastic bag. The other two 25-gram samples were placed in individual bowls. Each bowl of kibbles was treated with cold plasma as follows. In the first experiment, the bowl with 25-g of kibbles was placed on the elliptical shaker, and the speed of the shaker was adjusted to about 250 RPM. The cold plasma head was mounted so that the tip of the plasma jet ended about 6-7 mm above the kibbles. The sample was treated with plasma for about 30 seconds. In the second experiment, the bowl with 25-g of kibbles was placed on the elliptical shaker, but the shaker was left off, so that there was no mixing of the kibbles. The cold plasma head was mounted so that the tip of the plasma jet ended about 6-7 mm above the kibbles. The sample was treated with plasma for about 30 seconds. Each 25-gram plasma-treated sample was placed in an individual plastic bag. All three 25-g samples were analyzed for salmonella according to the method described in the US Food and Drug Administration Bacteriological Analytical Manual, Appendix 2, Most Probable Number from Serial Dilutions, which can be found on the web at the fda.gov/Food/FoodScienceResearch/LaboratoryMethods/ucml09656.htm site.

### Results and Conclusions

Table 4 below shows the results of the analysis. This experiment demonstrates that mixing enhances the cold plasma treatment, with the mixed sample achieving better reduction of salmonella than the unmixed sample. As shown in Table 4, the first group was not treated with cold plasma, was not mixed and had a salmonella content of 1100 cfu/g. Group 2 was treated with cold plasma for 30 seconds, was not mixed, and had 460 cfu/g. Group 3 was treated with cold plasma for 30 seconds and mixed at 250 rpm. The salmonella content of group 3 was 150 cfu/g. Therefore, mixing decreases the amount of salmonella on the food and provides a reduction of salmonella in connection with cold plasma treatment.

**TABLE 4**

| **Treatment time (seconds)** | **Mixing** | **Salmonella (cfu/g)** |
|---|---|---|
| 0 | None | 1100 |
| 30 | None | 460 |
| 30 | 250 rpm | 150 |

### Example 7

This example shows the effect of cold plasma treatment on the oxidative stability of the kibbles. Six 50-g samples of un-inoculated pet food kibbles were obtained.

### Materials and Methods

Three of the samples were controls and were placed in individual plastic bags. The other three samples were treated with cold plasma for 30 seconds, similar to the method in Example 5, and then placed in individual plastic bags. One of the control samples and one of the plasma treated samples were analyzed for total tocopherols and total aldehydes (Time 0 samples). Tocopherols and aldehydes are indicators of fat oxidation. Higher tocopherol level and lower aldehydes indicate lower oxidation and are preferred. The other two control samples and other two plasma treated samples were placed in a 37.5°C, 50% relative humidity chamber to measure the fat oxidation of the kibbles under stressful conditions. After 45 days in the chamber, one control and one plasma treated sample were removed and analyzed for tocopherols and total aldehydes. After 60 days in the chamber, the last of the three control and plasma treated samples were removed and analyzed for tocopherols and total aldehydes.

### Results and Conclusions

The result of the control and plasma treated samples are shown in Table 5 below. These results indicate no difference between the untreated and plasma-treated samples, even after an extended time at elevated temperatures and humidities. The increase in tocopherols in the control sample stored for 60 days is believed to be the result of variability in sampling and/or measurement. There is no expectation that tocopherols actually increased after 60 days in storage in the control group.

**TABLE 5**

| | **Control** | | **Plasma-treated** | |
|---|---|---|---|---|
| Storage time | Tocopherols (ppm) | Total Aldehydes (ppm) | Tocopherols (ppm) | Total Aldehydes (ppm) |
| Time 0 | 38.45 | <10 | 45.24 | <10 |
| 45 days | 38.12 | <10 | 38.87 | <10 |
| 60 days | 46.12 | <10 | 32.39 | <10 |

### Dupont BAX® Method

DuPont™ BAX® system uses Polymerase Chain Reaction (PCR) technology coupled with Real-Time detection to screen samples for a selected microbe. Initially, the samples are enriched in Buffered Peptone Water (BPW) for 24±2 hours at 35°C±1 °C. A 10 µl aliquot of the enriched sample is added to 500 µl of Brain Heart Infusion (BHI) broth and incubated at 35°C±1°C for three hours. 5 µl of this secondary enrichment is used for the Bax Screening Assay. Lysis reagent is added to the tubes which are then heated to lyse the bacterial cells. After cooling, 50 µl of the lysate is added to a PCR tube which contains DNA polymerase, nucleotides and primers. This tube is then placed in a thermocycler where it undergoes a series of heating and cooling steps. During the heating, the DNA denatures and separates into single strands. As the mixture cools, the primers bind to any target DNA sequences. The DNA polymerase uses nucleotides to extend the primers, creating 2 copies of the target DNA fragment. The multiple heating and cooling cycles result in an exponential increase in the target DNA. A fluorescent dye then binds to the double stranded DNA. This dye emits a fluorescent signal in response to light. During the detection phase of the assay, this fluorescent signal is measured.

### Porosity

### Scanco System

A Scanco Medical AG (Switzerland) micro-CT system, CT80 serial number 06071200 was used for acquisition of data. Equivalent equipment may be substituted.

### Sample selection

These samples were individual kibbles, randomly selected from a small bag of kibble.

### Sample Prep

A custom multi-layer sample tube was used to more easily position the samples for scanning. The custom tube consists of an approximately 35mm in diameter Scanco tube with a specially designed insert of 4 layers, each layer approximately 16mm high with an internal diameter of 28mm, to hold 1 kibble. The sample is placed in the insert, between 2 layers of fine sponge to hold it in place for scanning.

### Image acquisition parameters used in the Scanco CT80

Image acquisition parameters of the 3-D 36 micron isotropic scan include:
Medium resolution (500 projections) with the x-ray tube set for a current of 145 µA, 8 watts, and a peak energy of 55 kVp.

An Aluminum filter 0.5mm thick was used.

Integration time 400 msecond, Averaging set at 4.

A slice increment of 36 microns, with region of interest covering approximately 7-13 mm area with an imaging time of approximately 2.5 - 4.5 hours, depending on the size of the kibble.

The slices were used to reconstruct the CT image in a 1024 x 1024 pixel matrix, with a pixel resolution of 36 micron.

### Image analysis

Percent porosity is defined as the percent of voxels below a fixed threshold divided by the total number of voxels in the 3D region of interest. The 3D region of interest was manually selected. Since kibbles are different sizes, the volume of the region of interest varies with each kibble. The threshold used to separate the kibble from the background was 48.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method for reducing bioburden in a processed food having a porous surface and a coating deposited on the surface of the processed food wherein the coating comprises one or more ingredients which is susceptible to degradation by oxidation selected from the group consisting of fats, oils, enzymes, antibodies, immunoglobulins, cytokines, epigenetic agents, vitamins, probiotic microorganisms, amino acids, bacteriophages, the method comprising:
providing a processed food having a porous surface; and
treating the processed food having the coating with cold plasma generated from atmospheric gas under conditions sufficient to effect at least a 1 log reduction in the bioburden in the processed food, wherein the treatment is carried out at atmospheric pressure plus or minus 10%.

2. The method of Claim 1, wherein the processed food has a porosity greater than one of about 30%, about 40%, or about 50%.

3. The method of any preceding Claim, wherein the processed food comprises at least 9% fat.

4. The method of any preceding Claim, wherein the processed food comprises at least 15% fat.

5. The method of Claim 3 or 4, wherein at least 25% of the fat is coated onto the surface of the processed food.

6. The method of any preceding Claim, wherein, during the treating step, said processed food having a porous surface and having a coating is subjected to a treatment selected from the group consisting of being rotated, mixed, flipped, moved and combinations thereof within the plasma stream, such that a majority of the surface of said processed food having a porous surface and having a coating contacts the plasma stream.

7. The method of any preceding Claim, wherein said processed food product has an irregular shape or non-symmetrical shape.

## Patentansprüche

1. Verfahren zum Reduzieren der biologischen Last in einem verarbeiteten Lebensmittel, das eine poröse Oberfläche und eine auf der Oberfläche des verarbeiteten Lebensmittels abgeschiedene Beschichtung aufweist, wobei die Beschichtung einen oder mehrere Bestandteile umfasst, der/die anfällig für Abbau durch Oxidation ist/sind und ausgewählt ist/sind aus der Gruppe bestehend aus Fetten, Ölen, Enzymen, Antikörpern, Immunoglobulinen, Zytokinen, epigenetischen Mitteln, Vitaminen, probiotischen Mikroorganismen, Aminosäuren, Bakteriophagen, wobei das Verfahren umfasst:
Bereitstellen eines verarbeiteten Lebensmittels, das eine poröse Oberfläche aufweist; und
Behandeln des verarbeiteten Lebensmittels, das die Beschichtung aufweist, mit kaltem Plasma, das aus atmosphärischem Gas unter Bedingungen generiert wird, die ausreichen, um mindestens 1 log Reduktion in der biologischen Last des verarbeiteten Lebensmittels zu bewirken, wobei die Behandlung bei atmosphärischem Druck plus oder minus 10 % durchgeführt wird.

2. Verfahren nach Anspruch 1, wobei das verarbeitete Lebensmittel eine Porosität größer als eine von etwa 30 %, etwa 40 % oder etwa 50 % aufweist.

3. Verfahren nach einem der vorhergehenden Ansprüche, wobei das verarbeitete Lebensmittel mindestens 9 % Fett umfasst.

4. Verfahren nach einem der vorhergehenden Ansprüche, wobei das verarbeitete Lebensmittel mindestens 15 % Fett umfasst.

5. Verfahren nach Anspruch 3 oder 4, wobei mindestens 25 % des Fetts als Beschichtung auf die Oberfläche des verarbeiteten Lebensmittels aufgebracht werden.

6. Verfahren nach einem der vorhergehenden Ansprüche, wobei das verarbeitete Lebensmittel, das eine poröse Oberfläche und eine Beschichtung aufweist, während des Behandlungsschritts einer Behandlung unterzogen wird, die ausgewählt ist aus der Gruppe bestehend aus Rotieren, Mischen, Umdrehen, Bewegen sowie Kombinationen davon innerhalb des Plasmastroms, so dass ein überwiegender Anteil der Oberfläche des verarbeiteten Lebensmittels, das eine poröse Oberfläche und eine Beschichtung aufweist, in Kontakt mit dem Plasmastrom kommt.

7. Verfahren nach einem der vorhergehenden Ansprüche, wobei das verarbeitete Lebensmittelprodukt eine unregelmäßige Form oder unsymmetrische Form aufweist.

## Revendications

1. Procédé pour la réduction de la charge microbienne dans un produit alimentaire transformé possédant une surface poreuse et un revêtement déposé sur la surface du produit alimentaire, le revêtement comprenant un ou plusieurs ingrédients qui sont sensibles à une dégradation par oxydation choisis dans le groupe constitué par des graisses, des huiles, des enzymes, des anticorps, des immunoglobulines, des cytokines, des agents épigénétiques, des vitamines, des micro-organismes probiotiques, des acides aminés, des bactériophages, le procédé comprenant :
la mise à disposition d'un produit alimentaire transformé possédant une surface poreuse ; et
le traitement du produit alimentaire transformé possédant le revêtement avec un plasma froid généré à partir de gaz atmosphérique dans des conditions suffisantes pour avoir pour effet au moins une réduction de 1 log de la charge microbienne dans le produit alimentaire transformé, le traitement étant mis en œuvre à une pression atmosphérique plus ou moins 10 %.

2. Procédé selon la revendication 1, le produit alimentaire transformé possédant une porosité supérieure à l'une parmi environ 30 %, environ 40 %, et environ 50 %.

3. Procédé selon une quelconque revendication précédente, le produit alimentaire transformé comprenant au moins 9 % de graisse.

4. Procédé selon une quelconque revendication précédente, le produit alimentaire transformé comprenant au moins 15 % de graisse.

5. Procédé selon la revendication 3 ou 4, au moins 25 % de la graisse étant revêtue sur la surface du produit alimentaire transformé.

6. Procédé selon une quelconque revendication précédente, dans lequel, pendant l'étape de traitement, ledit produit alimentaire transformé possédant une surface poreuse et possédant un revêtement est soumis à un traitement choisi dans le groupe constitué par le fait d'être mis en rotation, mélangé, retourné, déplacé et des combinaisons correspondantes à l'intérieur du flux de plasma, de sorte qu'une majorité de la surface dudit produit alimentaire transformé possédant une surface poreuse et possédant un revêtement soit en contact avec le flux de plasma.

7. Procédé selon une quelconque revendication précédente, ledit produit alimentaire transformé possédant une forme irrégulière ou une forme non symétrique.
